# EUROPÄISCHE PATENTSCHRIFT

(11) **EP 0 636 080 B1**
(45) Veröffentlichungstag und Bekanntmachung des Hinweises auf die Patenterteilung: **05.06.2002**
(21) Anmeldenummer: 94906861.3
(22) Anmeldetag: 11.02.1994
(51) Int. Cl.: B61D 47/00, B61D 3/20, B65D 90/14, B60P 1/64

(54) **UMSCHLAGVORRICHTUNG**
TRANSHIPPING FRAME
CADRE DE TRANSBORDEMENT

(30) Priorität: 15.02.1993 DE 9302121 U
(43) Veröffentlichungstag der Anmeldung: 01.02.1995
(73) Patentinhaber: Wilcke, Hans, D-53498 Bad Breisig (DE)
(72) Erfinder: Wilcke, Hans, D-53498 Bad Breisig (DE)
(86) Internationale Anmeldenummer: DE9400140
(87) Internationale Veröffentlichungsnummer: WO9418047

(56) Entgegenhaltungen:
- CH-A- 666 452
- DE-A- 4 020 387
- US-A- 2 934 373
- US-A- 3 095 987
- US-A- 3 581 918

## Beschreibung

Die Erfindung betrifft eine Vorrichtung um Großbehälter, z.B. Container, Abrollbehälter u.ä von Fahrzeugen abzuladen und auf Stützfüßen abzustellen und umgekehrt und weiterhin das Auf- und Abladen von bekannten Wechselbehältern auf Fahrzeuge zu ermöglichen, die nicht über Ladeflächen mit veränderbarer Höhe verfügen.

Im Straßenverkehr breitet sich der Einsatz von Wechselbehältern nach DIN 70 013/ 70 014 als wirtschaftlichste Lösung von Transport- und Umschlagproblemen aus.

Um die für den kombinierten Verkehr Schiene/Straße vorzüglich geeigneten Wechselbehälter an den Schnittstellen umschlagen zu können, ist jedoch aufwendiges Umschlaggerät - Container-Kräne, Groß-Gabelstapler oder Straddle-Carrier-erforderlich. Der Ausbau des kombinierten Verkehrs mit Wechselbehältern wird daher durch schwerwiegende Nachteile behindert:
- es sind sehr aufwendige Terminal-Investitionen erforderlich,
- wegen der aus Gründen der Wirtschaftlichkeit erzwungenen Konzentration des Umschlages auf wenige Terminals bleibt ein relativ hoher Straßentransportanteil vornehmlich in Gebieten mit sowieso großem Verkehrsaufkommen erhalten, daraus folgt weiterhin hohe Umweltbelastung,
- vorhandene Terminals sind überlastet und schließen einen Ausbau des kombinierten Verkehrs aus oder erzwingen trendwidrig lange Transportzeiten.

Ähnlichen Nachteilen unterliegt der kombinierte Verkehr mit ISO-Container. Hinzu kommt, daß ISO-Container nicht am Arfang und Ende der Transportkette ohne Fahrgestell abgestellt werden können. Ein kostenmäßig optimierter Transport mit Containern ist ausgeschlossen.

Von Nachteil ist weiter, daß das Container-Transport-System und das Wechselbehälter-Transport-System besonders im Vor- und Rachtransport nicht oder nur teilweise compatibel sind.

Aufgabe dieser Erfindung ist es, zwischen den Verfahren des Wechselbehälter- und des Container-Transport-Systems im Kombinierten Verkehr und im Schienenverkehr mit unterschiedlichen Spurweiten volle Kompatibilität herzustellen, diese Verkehre auch mit nicht dafür eingerichteten Fahrzeugen systemgerecht durchführen zu können, dabei den Umschlag ohne kostspielige Umschlageinrichtungen auch außerhalb von Terminals und auch auf unebenem Gelände durchführen zu können und dabei die Abläufe zumindest teilweise zu automatisieren.

Gelöst wird die Aufgabe durch eine Umschlagvorrichtung, z.B. einen Liftrahmen, entweder gemäß Anspruch 1, beim Umschlagen eines Wechselbehälters ohne Stützbeine, oder gemäß Anspruch 2, beim Umschlagen eines Wechselbehälters mit eigenen Stützbeinen, wobei die Umschlagvorrichtung mit üblichen ausziehbaren und ausklappbaren Stützbeinen und mit Befestigungsmöglichkeiten für Behälter, z.B. Container, ausgestattet werden kann und Hubeinrichtungen, z.B. Luftkissen, vorgesehen sind, die wahlweise sowohl den auf dem Rahmen ruhenden Behälter anheben können - der Rahmen verbleibt auf seiner Unterlage - als auch der Behälter mitsamt dem Rahmen von seiner Unterlage abzuheben verrögen.

Die Automatisierung erfolgt durch sinnvolle Verknüpfung von Zustandsermittlungen mit Hilfe von Sensoren und vornehmlich mechanischer Verknüpfung mit daraus folgenden Vorgängen. Die Niveau-Anpassung wird bewirkt durch in ihrer Länge veränderbare Stützbeine, die vornehmlich hydraulisch miteinander verbunden sein können.

Entsprechende Verwendungen der erfindungsgemäßen Umschlagvorrichtung werden in den Ansprüchen 14 bis 16 angegeben.

Im Folgenden wird die Erfindung anhand von Zeichnungen näher erläutert; dabei zeigen die Zeichnungen lediglich einzelne Ausführungsbeispiele.

Eine Einrichtung zum Abladen von Großbehältem ist aus der CH-A-666 452 bekannt. Sie besitzt jedoch wesentliche Nachteile:
- Die Einrichtung ist allein anwendbar für Großbehälter mit eigenen Stützfüßen (Wechselbehälter). ISO-Container, Abrollbehälter und andere schwere Lasten können nicht umgeschlagen werden;
- die Einrichtung ist fest mit einem Eisenbahnwaggon verbunden, es müssen also neue Eisenbahnwaggons beschafft werden, vorhandene Waggons können nicht benutzt werden.
- Die angewandte Technik läßt zwar eine gewisse Querbeweglichkeit des Behälters gegenüber dem Waggon zu, um eine Zentrierung auf die Befestigungseinrichtungen des Waggons zu ermöglichen, sie erlaubt aber nicht das vorwählbare Querverschieben der Last beim Wechsel zwischen unterschiedlichen Spurweiten mit nicht identischer Mittelachse der Spuren.

Als nächstliegender Stand der Technik wird im Himblick auf Anspruch 1 die US-A-2,958,538 angesehen. Diese Einrichtung stellt einen speziellen Großbehälter dar, der mit ausfahrbaren Stützfüßen versehen ist, die mit Hydraulikzylindern ausgestattet sind, mit deren Hilfe die Hubbewegungen ausgeführt werden. Die Nachteile sind beachtlich:
- Es sind spezielle neue Behälter erforderlich. Die millionenfach vorhandenen ISO-Container und Wechselpritschen können nicht umgeschlagen werden.
- Die angewandte Technik läßt eine notwendige Querbewewgung des Behälters beim Spurwechsel mit unterschiedlichen Mittelachsen der Gleise nicht zu.
- Das System erfordert zwingend die Bereitstellung von hydraulischer Energie. Sie steht serienmäßig weder bei Eisenbahnwaggons noch bei Straßenfahrzeugen zur Verfügung. Mit den verfügbaren Energieformen Druckluft oder Elektroenergie (24 V) ist die Erfindung nicht realisierbar.

Die Einrichtung ist daher für einen flächendeckenden Einsatz unter Nutzung weit verbreiteter Fahrzeuge und Großbehälter nicht geeignet.

Als nächstliegender Stand der Technik wird im Himblick auf Anspruch 2 die US-A-3 098 987 angesehen.
Fig. 1 u. 2 zeigen einen ISO-Container auf einem Waggon mit Hilfe des Liftrahmens (1) angehoben und auf Stützbeinen (7) abgestellt,
Fig. 3 u. 4 einen Wechselbehälter, mit Hilfe des auf den Waggon verbliebenen Liftrahmens (1) angehoben und auf den Wechselbehälter-Stützbeinen (35) abgestellt.
Fig. 5 zeigt im Schnitt eine Hubeinrichtung(14), als Luftkissen ausgeführt.
Fig. 6 u. 7 zeigen in Seitenansicht und Schnitt die Mechanik für ein selbsttätiges Beladen eines Waggons mit einem Liftrahmen (1) und
Fig. 8 - 11 einen Eckbeschlag gemäß dieser Erfindung mit beiklappbarem Verriegelungszapfen.

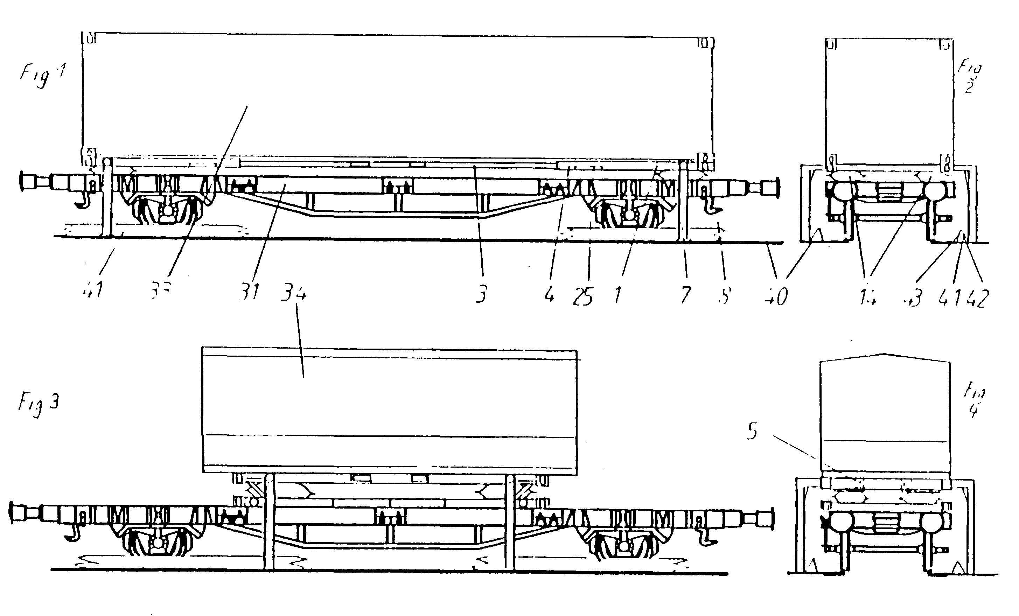

In Fig. 1 ist ein üblicher Container-Tragwagen (31) erkennbar, beladen mit einem ISO-Container (33), der sich auf einen Liftrahmen (1) befindet.

Der Liftrahmen (1) ist mit Container-Eckbeschlägen (8) ausgestattet, gegebenenfalls in einer besonderen Ausführung, die später erläutert wird. Sie sind während des Transportes mit den Verriegelungszapfen (32) des Waggons oder den Twistlocks der sonst transportierenden Fahrzeuge verbunden.

Der Liftrahnen (1) kann zur Anpassung an verschiedene Contain ner-Abmessungen teleskopierbar gestaltet sein. Er besteht dann aus mindestens einem Rahmen-Mittelteil (3) und zwei Rahmen-Endteilen (4) die ineinander verschiebbar und arretierbar gestaltet sind.

Alternativ kann der Rahmen (2), wenn er nur für eine bestimmte Containergröße nutzbar sein soll, auch einteilig ausgeführt sein.

Am Rahmen sind mindestens 4 Stützbeine (7) drehbar, einschiebbar und sicherbar angebracht, wie sie auch für Wechselbehälter eingeführt sind. Dabei kann es erforderlich sein, daß das lichte Maß zwischen den Stützbeinen (7) größer sein muß als sonst üblich, weil die größte Breite von Container-Tragwagen und sonst nutzbaren Flachwagen unterschiedlich, auf jeden Fall größer als bei Straßenfahrzeugen des Wechselpritschen-Verkehrs ist.

Der Rahmen (2) wird in der Regel u.a. durch zwei Längsträger gebildet, die entsprechend den Normen für Wechselbehälter DIN 70 013 angeordnet sind.

Seitlich zugänglich können Gabelstaplertaschen angeordnet sein.

In Rahmen (2) sind nahe den Eckbeschlägen (8) mindestens 2, in der Regel 4 Hubeinrichtungen (14) angebracht. Sie sind meist Luftkissen und so ausgelegt, daß sie, beschickt von der Druckluft des Fahrzeugs (Waggon, Lkw) das Maximalgewicht ISO-Container (33) + Liftrahmen (1) einschließlich Überladungs-Toleranzen anzuheben vermögen.

Da Container-Tragwagen meist keine durchgehende Ladefläche besitzen sondern nur unterschiedlich angeordnete Rahmenteile und ferner Container und Wechselbehälter von unten ebenfalls keine durchgehenden glatten Flächen besitzen, sind die Hubeinrichtungen (14) oben und unten mit Druckplatten (15) ausgestattet, die für einen gleichmäßigen Kraftübergang sorgen.

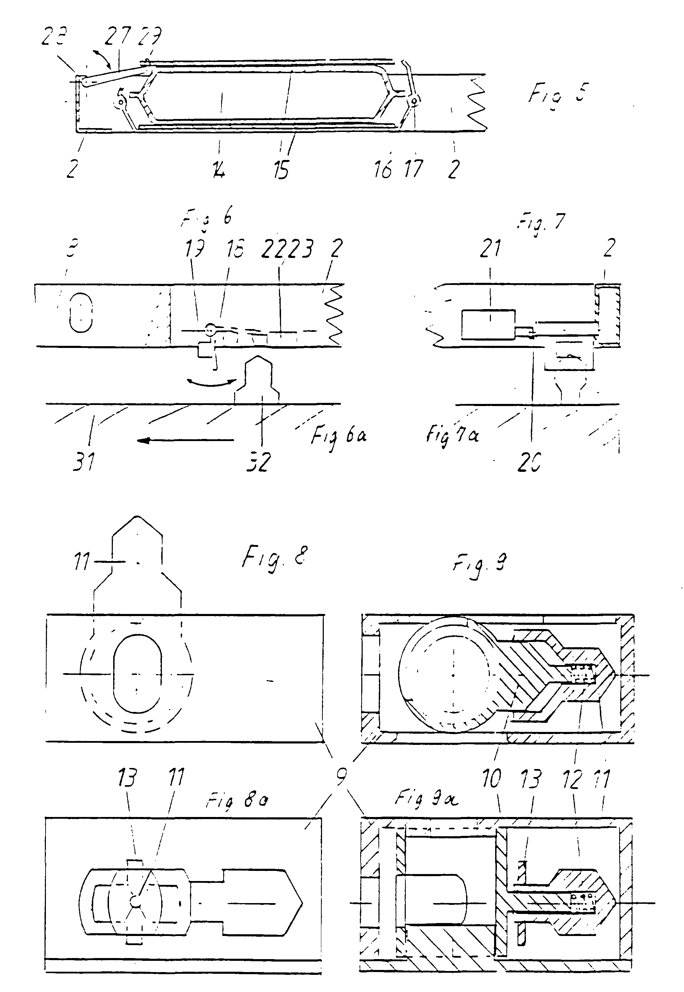

Die Druckplatten (15) (Fig. 5) werden von zwei vornehmlich quer im Rahmen (2) angeordneten Begrenzern (16) wahlweise oben oder unten arretiert.

Durch Schwenken um die Achsen (17) wird entweder die obere oder die untere Druckplatte (15) für eine Bewegung nach oben oder nach unten freigegeben, während die andere Druckplatte (15) gegenüber dem Rahmen arretiert ist.

Wird die obere Druckplatte (15) freigegeben, hebt sie bei Beschickung z.B. mit Druckluft, den über den Liftrahmen befindlichen Wechselbehälter (34) an, er kann danach auf seinen eigenen Stützbeinen abgestellt werden. Der Liftrahmen (1) verbleibt beim Fahrzeug.

Für das Umschlagen von ISO-Containern (33) werden dagegen die oberen Druckplatten (15) arretiert und die urteren freigegeben. Bei Beschicken mit Druckluft stützt sich die untere Druckplatte (15) auf der Fahrzeug-Plattform ab und hebt den Containner (33) mitsamt dem Liftrahmen (2) an, sodaß die Stützbeine (7) ausgeklappt und der Container (33) und der Liftrahmen (1) auf diesen abgestellt werden kann.

Die Hubhöhe des Liftrahmens (1) wird vornehmlich von der Höhe der nicht absenkbaren Verriegelungszapfen (32) und dem Federweg der Container-Tragwagen (31) bestimmt.

In besonderen Einsatzfällen, insbesondere, wenn ausschließlich Wechselbehälter umgeschlagen werden sollen, kann auf die Ausbildung eines großflächigen Rahmens (2) verzichtet werden. Hier genügt es, die Hubeinrichtungen (14) einer Querachse in einem verkürzten Rahmen-Endteil (4) zusammenzufassen. Wegen der geringen Dicke von Luftkissen sind dann statt relativ hoher Eckbeschläge (8) waagerechte Lochplatten nutzvollmit Lochabmessungen, die der unteren Öffnung von unteren Eckbeschlägen nach ISO-Norm entspricht. Dadurch können die Wechselbehälter auf den Verriegelungszapfen (32) der Waggons direkt aufgesetzt und für den Transport gesichert werden. Diese Variante erlaubt wegen der geringen Abmessungen und Gewichte ein Ausbringen auf dem Waggon von Hand.

Weiter können mit dieser Variante herkömmliche Container-Trailer mit Blattfederung für den Straßentransport von Wechselbehältern nutzbar gemacht werden.

Alternativ zu den Luftkissen können die Hubeinrichtungen (14) auch erfindungsgemäß aus flachen Hydraulik-Zylindern bestehen, sofern hydraulische Energie zur Verfügung steht.

Meist aber wird die Betätigung der Hubeinrichtungen (14), z.B. Luftkissen, durch Druckluft erfolgen, weil nur diese Energiequelle sowohl im Schienen- wie auch im Straßenverkehr verfügbar ist.

Die Liftrahmen (1) werden dann einzeln mit der Druckluft-Anlage des Trägerfahrzeugs unter Zwischenschaltung von Betätigungsventilen zu verbinden sein.

Soll eine Steuerung der Ladevorgänge von einer zentralen Stelle aus erfolgen, kann es zweckmäßig sein, die Liftrahmen (1) über eine durchlaufende Versorgungseinrichtung zu versorgen und dabei die Verbindung von Rahmen zu Rahmen mit üblichen flexiblen Leitungen herzustellen.

Ladevorgänge in Gruppen lassen sich durch mehrere parallel verlaufende Versorgungsleitungen mit getrennten Absperrorganen erreichen.

Für die Mechanisierung und Teil-Automatisierung der Umschlagverfahren werden seitens der Nutzer sehr unterschiedliche Forderungen gestellt werden. Auch die Einheitlichkeit oder Uneinheitlichkeit der Trägerfahrzeuge schafft unterschiedliche Ausgangs-Vorraussetzungen.

Es wird daher auf die Darstellung eines geschlossenen Automatisierungs-Systems verzichtet, vielmehr werden Bausteine im Rahmen dieser Erfindung angeboten, die in beliebiger Form kombinierbar erscheinen und eine optimale Lösung im Einzelfall ermöglichen.

Bei der üblichen Nutzung von Wechselbehältern im Zusammenhang mit Lkws werden geringe Abweichungen zwischen Mittelachse von Fahrzeug und Behälter durch Einweisungsvorrichtungen am Fahrzeug und Rollen und weiter durch geringe seitliche Bewegungen ausgeglichen. Schienengeführte Waggons lassen dieses Verfahren nicht zu. Vielmehr müssen die Liftrahmen (2) oder Wechselbehälter (34) genau bezogen auf die Waggon-Mittelachse aufgestellt werden.

Dies kann durch Markierungen auf der Abstellfläche (40) bewirkt werden.

Darüber hinaus können auf den Abstellflächen (40) der Umschlagstelle durchlaufend oder sporadisch Leitschienen (41) parallel zu den Schienen angebracht sein. (vergl. Fig. 1 - 4) Sie besitzen schräge Gleitflächen (42) außen und Führungsflächen (43) innen. Das Innenmaß der Führungsflächen (43) innen entspricht dem durchschnittlichen Außenmaß der Reifen eines Straßenfahrzeugs. Damit wird das Straßenfahrzeug beim Einfahren auf die Mittelachse der Schienen mit geringer Toleranz ausgerichtet. Beim Absenken der ausgeklappten Stützbeine (7, 35) werden diese durch die äußeren Gleitflächen (42) in genaue Position für die spätere Verladung gebracht.

Problematisch ist besonders die Übernahme der aufgestellten Liftrahmen (1) auf die unterfahrenden Waggons. (Vergl. Fig. 6 u. 7).

Ein Steuerhebel (18) ist in der Flucht der Verriegelungszapfen (32) der Waggons im Rahmen (2) angebracht und wird in etwa waagerechter Stellung durch einen Stopper (22) gehalten.

Beim Entlüften der Hubeinrichtung des vorhergehenden Waggons wird ein Teil der entweichenden Luft über die Verbindungsleitung (24) zum pneumatischen Kolben (23) im Stopper (22) geleitet, er wird zurückgezogen und gibt den Steuerhebel (18) frei. Er fällt, durch das Gewicht der Warze (19) bedingt, in eine etwa 80°-Stellung.

Der Verriegelungszapfen (32) nimmt, wenn der Waggon sich langsam in Pfeilrichtung bewegt, den Steuerhebel (18) um weitere ca. 90° drehend mit. Der Nocken (20) auf der Stirnseite der Achse des Steuerhebels (18) drückt nach einer Gesamtdrehung von ca. 100° auf ein Entlüftungsventil (21), das sich nach Betätigung selbsttätig offen hält, bis der Druckabbau im Luftkissen zum Absenken des Liftrahmens (1) auf die Verriegelungszapfen ( 32) und den Waggon (31) geführt hat. Wenn der Druck unter den dazu gehörigen Wert abgesunken ist, schließt das Ventil selbsttätig.

Damit sind die Luftkissen für den nächsten Hebevorgang bereit. Beim nächsten Anheben des Liftrahmens (1), z.B. beim Entladen, fällt der Steuerhebel (18) durch das Gewicht der Warze wieder in eine etwa 80° Position zurück.

Mit dem Herausfahren des Waggons in Pfeilrichtung wird der Steuerhebel (18) vom Verriegelungszapfen (32) mitgenommen und in seine, vom Stopper (22) gesicherte Ausgangsposition zurückgedreht.

Weiterhin kann durch mechanisches Abgreifen des größer werdenden Abstandes zwischen den beiden Druckplatten (15) das Ausschieben und Abklappen bezw. das Beiklappen und einziehen der Stützbeine (7) automatisiert werden. Dabei ist sichergestellt, daß in Zwangsfolge ein Be- und Entlüftungsvorgang das Ausklappen und der nächste Be- und Entlüftungsvorgang das Beiklappen bewirkt.

Weiter kann vorgesehen werden, daß das Entlüften durch das Ertlüftungsvertil (21) nur freigegeben wird, wenn entweder die Stützbeine voll beigeklappt oder voll ausgeklappt und/oder zusätzlich gesichert sind.

Mit dieser Anordnung läßt sich bei Abstimmung des Zeitbedarfs für die einzelnen Vorgänge auf eine minimale Fortbewegungsgeschwindigkeit der Waggons eine kontinuierliche Beladung ohne Bremsvorgang und Stillstand und ohne manuelle Tätigkeit an den einzelnen Waggons erzielen. Auch Unterschiede in Waggonlängen und Behälter-Längen können so beherrscht werden.

Zusätzlich ist aus Sicherheitsgründen denkbar, daß z.B. bei nicht voll beigeklappten Stützbeinen oder anderen Unregelmä-Bigkeiten ein Bremsvorgang der Waggons eingeleitet wird, um Fehlbeladungen zu verhindern.

Zum Aufsetzen leerer Liftrahmen (1) auf das Trägerfahrzeug in Terminals können die bei Wechselbehältern üblichen Greiferzangenleisten (25) am Rahmen (2) vorgesehen werden.

Um das Aufsetzen auch mit Spreadern möglich zu machen, die nicht mit Greiferzangen ausgestattet sind, müssen die Eckbeschläge (8) mit oberen normgerechten Öffnungen von oberen Eckbeschlägen ausgestattet sein. Zum Verriegeln aufgesetzter Behälter (33,34) müssen sie dagegen mit Verriegelungszapfen ähnlich (32) ausgestattet sein (vergl. Fig. 7 - 11). Deshalb können die Eckbeschläge (8) besonders gestaltet sein.

Im Eckbeschlagkörper (9) ist drehbar der Verriegelungszapfenfüß (10) angebracht. Auf dem Fuß (10) ist verschiebbar der Zapfenkopf (11) auf einer Druckfeder (12) ruhend angebracht. Er ist mit Nasen (13) versehen, die in entsprechende Ausnehmungendes Eckbeschlagkörpers eingreifen kömmen.

Eine weitere Feder (nicht gezeichnet), hält den Verriegelungszapfen etwa aufrecht.

Wird ein Container/Wechselbehälter aufgesetzt, so drückt er die Nasen (13) in die Ausnehmungen des Eckbeschlagkörpers (9). Der Zapfen ist verriegelt.

Ein sich absenkender Spreader wird mit seinen Twistlocks die Zapfen (10,11,12) an ihren schrägen Flächen treffen und sie zur Seite drehen, sodaß sie im Eckbeschlag verschwinden (s. Fig. 9) und die obere Öffnung zur Verriegelung freigeben. Um auch auf nicht ebenen Abstellflächen den Behälter (33,34) etwa eben abstellen zu können, insbesondere wenn - bei 40'-Container - mehr als 4 Stützbeine vorgesehen werden, kömmen diese mit teleskopierbaren Füßen ausgestattet sein. Zwischen Bein und Fuß ist dann ein Hydraulik-Zylinder angebracht. Die Zylinder aller Beine sind hydraulisch einzeln absperrbar untereinander und mit einem Öl-Vorratsbehälter verbunden.

Beim Absetzen werden, nachdem alle Füße den Boden berührt haben und sich in den Zylindern ein Druck aufzubauen beginnt, die Ventile geschlossen. Alle Beine sind dann in zweckmäßiger Länge ausgefahren und werden eine der Schwerpunktlage entstrechende Last tragen.

Die Ventile können auch z.B. federbelastete Kugelventile sein. Der Schließdruck ist dann niedriger vorzusehen, als bei leerem Behälter sich aufbauen würde. Eine Längenanpassung aller Beine ist über den anfänglichen Druckausgleich gewährleistet, ein späteres Neigen oder gar Umkippen unter der Last durch das Absperren der einzelnen Zylinder verhindert.

In einer alternativen Gestaltungsform zum Einsatz im Zusammenhang mit ISO-Containern kann der Liftrahmen in mehrere, mechanisch voneinander getrennte, in ihrer jeweiligen Teilaufgabe getrennt funktionsfähige Aggregate aufgeteilt sein, die jeweils mit Hubeinrichtungen (14) einer Querachse , wie schon vorher beschrieben oder mit Stützbeinen (7) einer Querachse ausgestattet sein können.

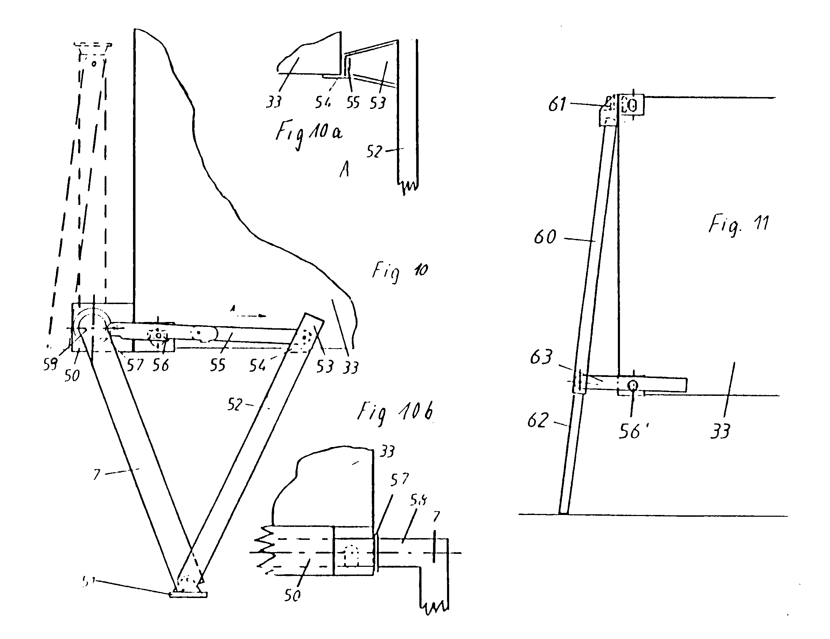

Eine Gestaltungform für die Stützbeine (vergl. Fig.10) besteht aus einer Quertraverse (50), die an den beiden Stirnseiten des Containers in den stirnseitigen Augen der unteren Eckbeschläge verriegelt wird.

In der Quertraverse (50) sind ausziehbar, drehbar und verriegelbar die Stützbeine (7) mit ihren waagerechten Schäften (58) angeordnet. Die Stützbeine sind während des Transports nach oben gedreht und dort gesichert.

Zum Aufstellen des Containers werden sie ausgezogen und um mehr als 180° gedreht, sodaß sie eine leichte Neigung haben. Zusammen mit den Fußplatten (51) sind drehbar Streben (52) angebracht, die die leicht geneigten Stützbeine (7) gegen den Containerrahmen abstützen. Dazu greift der an der Strebe (52) angebrachte Tragewinkel (53) mit den Stützwinkel (54) unter den Containerrahmen. Der Tragwinkel (53) ist mit einem Knickverbinder (55) mit einer Scheibe (57) verbunden, die auf dem Schaft (58) lose angebracht ist.

Das aus Stützbein (7), Strebe (52) und Knickverbinder (55) gebildete Dreieck gewährt einen sicheren Stand, der Tragewinkel (53) und das ausgezogene Stützbein (7) die gewünschte lichte Durchfahrtweite unter den Container. Die in die seitliche Öffnung des Eckbeschlages eingreifende Verriegelung (56) stabilisiert das System. Der Knickverbinder (55) wird beim Hochklappen des Stützbeines (7) eingeknickt und ermöglicht so eine raumsparende Anordnung beim Transport.

In einer weiteren Alternative können lange Stützbeine (60) (Vergl. Fig. 11) vorgesehen werden, die an ihrem oberen Ende mit beweglich angebrachten Befestigungen, vom Boden bedienbar und verriegelbar, z.B. mit Twistlocks (61), ausgestattet sind. Die Stützbeine (60) sind während des Transports etwa senkrecht an den Stirnseiten oder Langseiten des Containers befestigt, je nach dem verfügbaren Raum und einzuhaltenden Maßen und sind dann nicht länger als der Container hoch ist. Zum Aufstellen werden die teleskopierbaren Unterteile (62) in gewünschter Länge ausgefahren und lasttragend verriegelt.

An den Stützbeinen (60) befindet sich mindestens eine Querstrebe (63), die mit z.B. Twistlock (61') oder auf ähnliche Weise in einem untenen Eckbeschlag veriegelt wird. Zur Erhöhung der Stabilität sollte sie über den Eckbeschlag hinausragen und sich so auch gegen den Rahmen des Containers abstützen. Auch kann die Querstrebe den Eckbeschlag im Winkel zweiflächig umgreifen.

Weiterhin können zur Stabilisierung mindestens 2 Stützbeine (60) in ausgestelltem Zustand untereinander verbunden oder verbindbar sein.

In Weiterführung dieser Alternative können die Stützbeine auch integraler Bestandteil des Containers, eingeordnet in die senkrechten Pfosten des Containers, sein. Sie können weiter, in beigeklapptem Zustand als tragende Teile des Containergerüsts ausgebildet sein, sodaß sie die nach Normen vorgeschriebenen in der Senkrechten aufzunehmen den Kräfte aus darüber gestapelten weiteren Containern ganz oder teilweise aufnehmen können. Beim Umsetzen von Großbehältern im Schienenverkehr, z.B. von Waggons mit Schmalspur auf Waggons der Normalspur oder von Waggons der Normalspur auf Breitspur (z.B. Spanien, GUS), ist häufig nur eine Schiene der schmaleren Spur zusätzlich verlegt, die gegenüberliegende Schiene wird von Rädern beider Spuren benutzt. Das bedeutet, daß die Mittelachsen der Waggons voneinander abweichen. Zum Umsetzen von Großbehältern müssen diese von einer Waggon-Mittelachse zur anderen Waggon-Mittelachse eine Querbewegung ausführen. Durch geeignete Gestaltung ist dies mit der Hubeinrichtung (14) möglich.

Zu diesem Zweck (vergl. Fig. 5) ist ein Hakelhebel (27) drehbar um die Achse (28) z.B. am- Rahmen (2) befestigt, der mit seinem Haken (29) in die Druckplatte (15) eingreift.

Wird z.B. das Luftkissen (14) aufgeblasen, führt der Hakenhebel (27) eine kreisförmige Bewegung aus, die Druckplatte (15) führt dadurch nicht nur eine Bewegung nach oben, sondern auch eine seitliche Bewegung in Richtung Achse (28) aus.

Durch Abstimmung der Länge des Hakenhebels (27) läßt sich das Maß der Querbewegung zwangsläufig und reproduzierbar bestimmen und den Bedürfnissen anpassen.

Variabel einstellbare Seitenbewegungen lassen sich z.B. (nicht gezeichnet) durch Lagerung des Hakenhebels (27) auf einem excentrischen Nocken auf der Achse (28) erzielen.

Die seitwärtige Bewegung der Druckplatte kann (14) auch durch z.B. Führung in verstellbaren Kulissen erzeugt werden.

Mit diesem Verfahren lassen sich aufwendige Umspuranlagen einsparen und an den Übergangsstellen auch nicht für den durchgehenden Verkehr eingerichtete oder zugelassene Waggons benutzen. Die Waggonverwaltung und Umlaufsteuerung wird vereinfacht, Nutzungsausfälle und unwirtschaftliche Stehzeiten können vermieden werden.

### Liftrahmen Teileliste

- 1: Liftrahmen
- 2: Rahmen
- 3: Rahmen-Mittelteil
- 4: Rahmen-Endteil
- 5: Längsträger
- 6: Gabeltaschen
- 7: Stützbein
- 8: Eckbeschlag
- 9: Eckbeschlagkörper
- 10: Verriegelungszapfenfuß
- 11: Zapfenkopf
- 12: Druckfeder
- 13: Nase
- 14: Hubeinrichtung
- 15: Druckplatte
- 16: Begrenzer
- 17: Achse
- 18: Steuerhebel
- 19: Warze
- 20: Nocken
- 21: Entlüftungsventil
- 22: Stopper
- 23: pneumatischer Kolben
- 24: Verbindungsleitung
- 25: Greiferzangenleiste
- 26 27: Hakenhebel
- 28: Ackse
- 29: Haken
- 31: Container-Tragwagen
- 32: Verriegelungszapfen
- 33: ISO-Container
- 34: Wechselbehälter
- 35: Wechselbehälter-Stützbein
- 36: Twistlock
- 37 38 39 40: Abstellfläche
- 41: Leitschiene
- 42: schräge Gleitfläche
- 43: Führungsfläche
- 44 50: Quertraverse
- 51: Fußplatte
- 52: Strebe
- 53: Tragewinkel
- 54: Stützwinkel
- 55: Knickverbinder
- 56: Verriegelung
- 57: Scheibe
- 58: Schaft
- 59 60: Stützbein, lang
- 61: Twistlock
- 62: teleskopierbares Unterteil
- 63: Querstrebe

## Patentansprüche

1. Umschlagvorrichtung (1) zum Umschlagen von Großbehältern, insbesonders von Wechselbehältern, von Abrollbehältern oder von ISO-Containern, indem der Großbehälter mittels der Umschlagvorrichtung zwischen den Ladeflächen verschiedener Fahrzeuge, insbesondere zwischen den Ladeflächen von Eisenbahnwaggons und von Lastkraftwagen, umgeschlagen wird, welche Umschlagvorrichtung (1) aus einem Tragrahmen (2) besteht, der versehen ist mit Aufnahmemitteln, die im Betrieb eine Festlegung des Tragrahmens und eines darauf befindlichen Großbehälters gegenüber der Ladefläche ermöglicht, und mit höhenverstellbaren, am Tragrahmen (2) ausklappbar angebrachten Stützbeinen (7), wobei beim Umschlagen der Tragrahmen (2) sich selber zusammen mit einem gegebenenfalls daraufliegenden Großbehälter von der jeweiligen Ladefläche abhebt, um dann anschließend auf den Stützbeinen freistehend zu bleiben,
**dadurch gekennzeichnet,**
**daß** der Tragrahmen (2) Hubeinrichtungen (14) aufweist, die bewirken, daß im Betriebszustand, bei dem ein Großbehälter sich auf dem Tragrahmen und dieser sich wiederum auf einer Fahrzeugladefläche stützt, infolge einer wahlweisen Betätigung der Hubeinrichtungen (14) entweder der Großbehälter gegenüber dem Tragrahmen oder aber der Tragrahmen gemeinsam mit einem daraufliegenden Großbehälter gegenüber der Ladefläche des Fahrzeugs abhebbar ist.

2. Umschlagvorrichtung (1) zum Umschlagen von mit eigenen Stützbeinen versehenen Wechselbehältern, indem der Wechselbehälter mittels der Umschlagvorrichtung zwischen den Ladeflächen verschiedener Fahrzeuge, insbesondere zwischen den Ladeflächen von Eisenbahnwaggons und von Lastkraftwagen, umgeschlagen wird, welche Umschlagvorrichtung (1) aus mindestens zwei, je mit einer eigenen Hubeinrichtung versehenen Teiltragrahmen (4) besteht,
**dadurch gekennzeichnet,**
**daß** jede Teiltragrahmen eine getrennt handhabbare, mit mindestens je zwei Lochplatten (71) versehene Einheit bildet, wobei jede Lochplatte eine den jeweils auf der Ladefläche vorgeschriebenen Verriegelungszapfen (32) entsprechenden Öffnung aufweist, derart daß, als während des Betriebs der Teiltragrahmen auf einer Ladefläche aufliegt und der dazugehörige Verriegelungszapfen die Öffnung der Lochplatte durchdringt, der Verriegelungszapfen immer noch dermaßen über die Lochplatte hinaussteht, daß ein wiederum daraufliegender Wechselbehälter weiterhin verriegelbar ist, wobei jeder Teiltragrahmen mittels seinen dazugehörigen Lochplatten mit dem Wechselbehälter und/oder mit der Ladefläche verbindbar ist, und wobei die Hubeinrichtung (14) infolge einer wahlweisen Betätigung entweder der Wechselbehälter gegenüber der auf der Ladefläche aufliegenden Umschlagvorrichtung oder aber die Umschlagvorrichtung zusammen mit dem Wechselbehälter gemeinsam gegenüber der Ladefläche abhebbar ist, damit der Wechselbehälter anschließend auf eigenen Stutzbeinen freistehend abgesetzt werden kann, wobei im ersten Fall die Teiltragrahmen der Umschlagvorrichtung weiterhin an der Ladefläche aufliegend bleibt, jedoch im zweiten Fall sich mit dem Wechselbehälter von der Ladefläche weghebt.

3. Umschlagvorrichtung nach Anspruch 1, **dadurch gekennzeichnet, daß** der Rahmen (2) in der Länge verstellbar, insbesondere teleskopierbar, ist, um sich im Betrieb auf unterschiedliche Abstände zwischen den Eckbeschlägen verschiedener Großbehälter anzupassen.

4. Umschlagvorrichtung nach einem der Ansprüche 1 bis 3, **dadurch gekennzeichnet, daß** zwecks Zurren der Umschlagvorrichtung auf nicht mit Container-Verriegelungszapfen ausgestatteten Fahrzeugladeflächen Befestigungsmittel, wie Anschlagmittel, insbesondere Anschlagaugen, vorgesehen sind.

5. Umschlagvorrichtung nach einem der Ansprüche 1 bis 4, **dadurch gekennzeichnet, daß** der Tragrahmen (2) mit Gabeltaschen versehen ist.

6. Umschlagvorrichtung nach einem der Ansprüche 1 bis 5, **dadurch gekennzeichnet, daß** der Tragrahmen mit Eckbeschlägen versehen ist, die jeweils einen nach oben gerichteten Verriegelungszapfen aufweisen, der derart um 90° schwenkbar gelagert in den Eckbeschlag einklappbar ist, daß er dabei eine obere Normöffnung des oberen Eckbeschlags freigibt.

7. Umschlagvorrichtung nach einem der Ansprüche 1 bzw. 3 bis 6, **dadurch gekennzeichnet, daß** die Stützbeine (7) jeweils anhand von eingebauten Hydraulikzylindern längenveränderbar sind, wobei die Hydraulikzylinder untereinander absperrbar und mit einem Ausgleichsbehälter ebenfalls absperrbar verbunden sind.

8. Umschlagvorrichtung nach einem der Ansprüche 1 bis 7, **dadurch gekennzeichnet, daß** zwecks Automatisierung des Umschlagens die Umschlagvorrichtung mit Sensoren zur Feststellung des Lade- bzw. Umschlagzustandes und zur Überwachung eines Umschlagvorganges versehen ist.

9. Umschlagvorrichtung nach Anspruch 8, **dadurch gekennzeichnet, daß** die Umschlagvorrichtung einen Sensorhebel (18) aufweist, der durch den Verriegelungszapfen eines anfahrenden Fahrzeugs betätigbar ist, um das Absenken eines auf Stützbeinen freistehenden Großbehälters auf das Fahrzeug auszulösen.

10. Umschlagvorrichtung nach einem der Ansprüche 1 bzw. 3 bis 9, **dadurch gekennzeichnet, daß** die Hubeinrichtungen (14) mit den Stützbeinen (7) mechanisch verbunden sind, derart, daß das Aus- bzw. Beiklappen der Stützbeine in Abhängigkeit der Betätigung der Hubeinrichtungen erfolgt.

11. Umschlagvorrichtung nach einem der Ansprüche 1 bis 10, **dadurch gekennzeichnet, daß** jede Hubeinrichtung (14) mit einer oberen und mit einer unteren Druckplatte versehen ist, von denen eine jeweils entsprechend der gewählten Betätigung der Hubeinrichtung gegenüber der verbleibenden Druckplatte aus dem Tragrahmen nach oben bzw. nach unten ausfahrbar ist, wobei die ausgefahrene Druckplatte neben der vertikalen Bewegung auch gegebenenfalls noch eine beschränkte horizontale Bewegung zuläßt.

12. Umschlagvorrichtung nach Anspruch 11, **dadurch gekennzeichnet, daß** die horizontale Bewegung durch die Hubeinrichtung in Abhängigkeit von der vertikalen Bewegung vorgegeben ist.

13. Umschlagvorrichtung nach Anspruch 12, **dadurch gekennzeichnet, daß** die horizontale Bewegung der Druckplatten gegeneinander anhand von Hebeln, Kulissen oder dgl. vorgegeben ist.

14. Verwendung einer Umschlagvorrichtung gemäß Anspruch 11 zur Zentrierung eines zusammen mit der Umschlagvorrichtung auf einem Lastkraftwagen angefahrenen Großbehälters gegenüber einem anschließend auf einem Gleis anzufahrenden Eisenbahnwaggon, wobei Stützbeine entweder am Großbehälter oder aber an der Umschlagvorrichtung vorgesehen sind, bei welcher Verwendung das Gleis an der Umschlagstelle streckenweise zu beiden Seiten in gleichem Abstand mit Leitschienen (41) mit schräg geneigten Seitenflächen (42,43) versehen ist, deren Innenabstand dem Außenmaß der Reifen des Lastkraftwagen und deren Außenabstand dem Innenmaß der Stützbeine der Umschlagvorrichtung bzw. des Großbehälters entspricht, derart daß beim Anfahren des Lastkraftwagens mit auf der Umschlagvorrichtung angehobenem Großbehälter zunächst der Lastkraftwagen grob gegenüber dem Gleis und dann bei dessen anschließenden Absetzen der Großbehälter mittels den Stützbeinen quer zum Gleis ausgerichtet wird, derart daß nach Absetzen des Großbehälters auf den Stützbeinen und Wegfahren des Lastkraftwagens der Großbehälter gegenüber dem Gleis seine Endposition einnimmt und daher ohne weiteres auf die Ladefläche eines darunter zu positionierenden Eisenbahnwaggons absetzbar wäre.

15. Verwendung einer Umschlagvorrichtung gemäß einem der Ansprüche 1 bis 13 zum Umschlagen eines mit ansteckbaren Stützbeinen ausrüstbaren ISO-Containers, bei der an den stirnseitigen unteren Öffnungen der Eckbeschläge des Containers eine Quertraverse (50) durch Verriegelung befestigt wird, Stützbeine (7) aus der Quertraverse hinausgezogen, verdreht, ggf. in ihrer Länge verstellt, und derart verriegelt werden, daß sie sich gegen den Container abstützen.

16. Verwendung einer Umschlagvorrichtung gemäß einem der Ansprüche 1 bis 13 zum Umschlagen eines ISO-Containers, bei der der Container mit Stützbeinen versehen wird, die an den jeweiligen oberen Eckbeschlägen des Containers befestigt sind, derart, daß jedes Stützbein verlängerbar ist, von einer Länge die geringer ist als die Höhe des Containers, auf eine Länge die zur Gewährleistung einer bestimmbaren Abstellhöhe über die Containerhöhe hinausreicht, sowie schräg ausstellbar und mit mindestens einem Verbindungsglied (63) zum unteren Eckbeschlag des Containers in einer gewünschter Neigung arretierbar ist.

17. Verwendung nach Anspruch 16, **dadurch gekennzeichnet, daß** die Stützbeine jeweils an den oberen Eckbeschlägen des Containers lösbar befestigt sind.

18. Verwendung nach Anspruch 16, **dadurch gekennzeichnet, daß** jedes Stützbein als integrales Bestandteil des Containers ausgebildet ist, derart, daß es zwecks Aufnahme der vertikalen Belastung im Falle von mehreren aufeinandergestapelten Containern im eingeklappten Zustand als tragender Bestandteil des Containers ausgebildet ist.

## Claims

1. A transhipment device (1) for the transhipment of large containers, in particular of interchangeable containers, of roller containers or of ISO containers in which the large container is transhipped by means of the transhipment device between the cargo-carrying surface of the railway wagon and the truck, the transhipment device (1) consisting of a support frame (2) equipped with a means for loading that enables, during operation, the fixing of the support frame and a large container it is holding in relation to the cargo-carrying surface and with height-adjustable supporting legs (7) that are attached to the support frame (2) and can be folded out, whereby, during operation, the support frame (2) can be raised, to bear, if necessary, a large container from the cargo-carrying surface in question in order then to remain free standing on the support legs. The device is **characterised by**:
the fact that the support frame (2) possesses lifting devices (14) that enable, in an operational state, the support of a large container on the support frame and this in turn on a vehicle cargo-carrying surface; the lifting devices (14) being activated as desired so that the large container in relation to the support frame or, however, the support frame along with the large container on it can be raised in relation to the cargo-carrying surface of the vehicle.

2. A transhipment device (1) for transhipping interchangeable containers with their own support legs in which the interchangeable container is transhipped by means of the transhipment device between the cargo-carrying surfaces of different vehicles, in particular between the cargo-carrying surfaces of railway wagons and of trucks, in which the transhipment device (1) consists of at least two support frames (4) each equipped with its own lifting device, and **characterised by**:
the fact that each part support frame forms a separate and serviceable unit furnished with at least two hole platens (7) each, each hole platen possessing an opening corresponding to one of the respectively prescribed retaining lugs (23) on the cargo-carrying surface in such a way so that during operation the part support frame rests on the cargo-carrying surface and the respective retaining lug penetrates the opening of the hole platen. The retaining lug is to stand over the hole platen such that an interchangeable container placed on top of this can still be locked, each part support frame being able to be connected by means of its respective hole platen with the interchangeable container an/or with the cargo-carrying surface and with the lifting device (14) being able to be activated as desired so that either the interchangeable container in relation to the transhipment device located on the cargo-carrying surface or the transhipment device along with the interchangeable container can be both raised in relation to the cargo-carrying surface so that the interchangeable container can then be put down to rest on its own free-standing support legs, whereby in the first instance the part support frames of the transhipment device still remain on the cargo-carrying surface, but in the second instance, are raised along with the interchangeable container from the cargo-carrying surface.

3. A transhipment device in accordance with Claim 1 and **characterised by** the fact that the frame (2) can be longitudinally adjusted, and in particular is telescopic in order, during operation, to allow it to adjust to the different distances between the corner fixtures of different containers.

4. A transhipment device in accordance with Claims 1 through 3 and **characterised by** the fact that it possesses a means of fixing, such as sling gear, in particular, fixing lugs, for the purposes of lashing the transhipment device to vehicle cargo-carrying surfaces that are not equipped with container retaining lugs.

5. A transhipment device in accordance with Claims 1 through 4 and **characterised by** the fact that the support frame (2) is furnished with fork pockets.

6. A transhipment device in accordance with Claims 1 through 5 and **characterised by** the fact that the support frame is furnished with comer fixtures that each have an upward facing retaining lug that can be swivelled through 90° in such a way so as, folded away in the comer fixture, it reveals an upper standard opening on the upper corner fixture.

7. A transhipment device in accordance with Claims 1 and 3 through 6 and **characterised by** the fact that the support legs (7) can each be adjusted in length by means of installed hydraulic cylinders, the hydraulic cylinders being able to be locked independently of each other and connected also on an independent basis with a compensation container.

8. A transhipment device in accordance with Claims 1 through 7 and **characterised by** the fact that, for the purposes of automation of the transhipment process, the, transhipment device is furnished with sensors to determine the loading and transhipment state and to monitor the transhipment process.

9. A transhipment device in accordance with Claim 8 and **characterised by** the fact that the transhipment device possesses a sensor lever (18) that can be activated by the retaining lugs of an approaching vehicle in order to trigger the lowering of a container that is free-standing on its support legs onto the vehicle.

10. A transhipment device in accordance with Claims 1 and 3 and 9 and **characterised by** the fact that the lifting devices (14) are mechanically connected with the support legs (7) in such a way so that the folding and unfolding of the support legs depends on the activation of the lifting devices.

11. A transhipment device in accordance with Claims 1 through 10 and **characterised by** the fact that each lifting device (14) is furnished with an upper and a lower pressure plate that can be extended upwards or downwards depending on the correspondingly selected activation of the lifting device in relation to the remaining pressure plate from the support frame; it being also possible for the extended pressure plate, if required, to exercise some limited horizontal movement apart from the vertical motion.

12. A transhipment device in accordance with Claim 11 **characterised by** the fact that the horizontal movement generated by the lifting device is dependent on the vertical movement.

13. A transhipment device in accordance with Claim 12 **characterised by** the fact that the horizontal movement of the pressure plates against each other is controlled by levers, links or similar.

14. Use of a transhipment device in accordance with Claim 11 for the centring of a large container together with the transhipment device located on a truck which is driven up to await the arrival of a railway wagon, the support legs being located either on the large container or, however, on the transhipment device, for the use of which the track at the site of transhipment is furnished in stretches on both sides with guide rails (41) sited at the same distance with slanted angled lateral surfaces (42,43), the interior distance of which corresponding to the exterior dimension of the tyres of the truck and the exterior distance corresponding to the interior dimensions of the support legs of the transhipment device or the large container and designed in such a way so that when the truck drives up with the raised large container on the transhipment device, the truck is first roughly positioned in relation to the track and then when it unloads the large container by means of the support legs is positioned transversely to the track in such a manner that after the large container has been deposited on the support legs and the truck has departed the large container is in a final position in relation to the track and therefore can, without further ado, be deposited on the cargo-carrying surface of a railway wagon to be positioned beneath it.

15. Use of a transhipment device in accordance with the Claims 1 through 13 for the transhipment of an ISO container equipped with attachable support legs in which a side beam (50) is mounted by means of a locking device on the frontal side of the lower openings of the corner fixtures of the container; the support legs (7) are retracted from the side beam, swivelled and if required adjusted in length and locked in such a manner that they can support against the container.

16. Use of a transhipment device in accordance with the Claims 1 through 13 for the transhipment of an ISO container in which the container is equipped with support legs that are mounted on each of the upper corner fixtures of the container in such a way that each support leg can be adjusted in length from a length that is less that the height of the container to a length that assures a determinable setting down height over the height of the container, as well as being able to be placed at an angle and having at least a connecting joint (63) to the lower corner fixture of the container and being able to be securely locked at a desired angle.

17. Use in accordance with Claim 16 and **characterised by** the fact that each of the support legs on the upper corner fixtures of the container are not permanently mounted.

18. Use in accordance with Claim 16 and **characterised by** the fact that each support leg forms an integral component of the container in such a way that it is designed, in its folded state, as a supporting component of the container for the purpose of accepting vertical loading should several containers be stacked on top of the container.

## Revendications

1. Dispositif de manutention (1) pour la manutention de grands conteneurs, en particulier de conteneurs interchangeables, de dérouleurs ou de containers ISO, au cours desquels le grand conteneur est manutentionné à l'aide du dispositif de manutention depuis les plates-formes de différentes sortes de véhicules, en particulier entre les plate-formes de wagons de chemin de fer et de camions poids lourds, et ce dispositif de manutention (1) est composé d'un cadre portant (2), pourvus de moyens de réception et qui permet, lors de l'utilisation, la fixation du cadre portant et du grand conteneur disposé dessus à la plate-forme du véhicule, et de jambes d'appui réglables en hauteur, fixées au cadre portant (2), et celui-ci se lève lui-même en même temps que le grand conteneur posé dessus de la plate-forme du véhicule correspondante pour demeurer ensuite debout sur les jambes portantes,
**caractérisé par le fait :**
**que** le cadre portant (2) présente des dispositifs de levage (14), qui ont pour effet que dans l'état de fonctionnement, au cours duquel un grand conteneur s'appuie sur le cadre portant et celui-ci à son tour sur la plate-forme d'un véhicule, en raison de l'actionnement au choix des dispositifs de levage (14) soit le grand conteneur par rapport au cadre portant, soit le cadre portant avec le grand conteneur posé dessus, puissent être levés de la plate-forme du véhicule.

2. Dispositif de manutention (1) pour la manutention de conteneurs interchangeables pourvus de leurs propres jambes d'appui. Pour la manutention le conteneur interchangeable est transbordé à l'aide du dispositif de manutention depuis les plates-formes de différentes sortes de véhicules, en particulier de wagons de chemin de fer et de camions poids lourds, et ce dispositif de manutention (1) est composé d'au moins deux cadres portants partiels (4) pourvus chacun de son propre dispositif de levage
**caractérisé par le fait :**
**que** chaque cadre portant partiel constitue une unité qui peut être manoeuvrée de manière séparée, et comportant au moins deux plaques perforées chacun, chaque plaqué perforée comportant une ouverture correspondante aux taquets de verrouillage (32) prescrits sur la plate-forme, et ce de manière à ce que, durant le fonctionnement, le cadre partiel repose sur la plate-forme et que le taquet de verrouillage correspondant s'introduise dans l'ouverture, le taquet de verrouillage dépasse encore assez de la plaque perforée pour qu'un conteneur interchangeable posé dessus puisse, lui aussi, être verrouillé, chaque cadre portant partiel pouvant être relié à l'aide des plaques perforées qui lui appartiennent avec le container interchangeable et/ou avec la plate-forme et le conteneur interchangeable pouvant être levé par rapport au dispositif de manutention reposant sur la plate-forme ou bien ledit dispositif de manutention pouvant être levé avec le conteneur interchangeable par rapport à la plate-forme
afin que le conteneur interchangeable puisse ensuite être mis debout et tenir seul sur ses propres jambes, alors que dans le premier cas les cadres partiels du dispositif de levage demeurent sur la plate-forme du véhicule et que toutefois dans le second cas se lèvent de la plate-forme avec le conteneur changeable.

3. Dispositif de manutention selon la revendication 1, **caractérisé par le fait que** le cadre (2) est réglable en longueur, en particulier télescopique, pour pouvoir s'adapter lors de l'utilisation à de distances différentes entre les pièces de coin de différents grands conteneurs.

4. Dispositif de manutention selon les revendications 1 à 3, **caractérisé par le fait qu'**afin d'amarrer les dispositifs de manutention sur des plates-formes non équipées de taquets de verrouillage, des moyens de fixation, comme des dispositifs d'attache, en particulier des mamelons de butée, sont prévus.

5. Dispositif de manutention selon l'une des revendications de 1 à 4, **caractérisé par le fait que** le cadre portant (2) portant est pourvu de poches pour les fourches des élévateurs.

6. Dispositif de manutention selon l'une des revendications de 1 à 5, **caractérisé par le fait que** le cadre portant est pourvu de pièces de coin qui présentent chacune un taquet de verrouillage dirigé vers le haut, qui est pivotant à 90° en position repliée dans la pièce de coin, de façon à ce qu'en même temps une ouverture selon la norme soit libérée dans la pièce de coin supérieure.

7. Dispositif de manutention selon les revendications 1 ou 3 à 6, **caractérisé par le fait que** les jambes d'appui (7) puissent chacune être prolongées au moyen de cylindres hydrauliques, et que ces cylindres hydrauliques puissent être coulés les uns par rapport aux autres et sont reliés à un réservoir égalisateur qui puisse, lui aussi, être coupé.

8. Dispositif de manutention selon l'une des revendications de 1 à 7, **caractérisé par le fait qu'**en vue de l'automatisation de la manutention le dispositif de manutention soit équipé de capteurs permettant de déterminer l'état de chargement ou manutention et de surveiller un processus de manutention.

9. Dispositif de manutention selon la revendication 8, **caractérisé par le fait que** le dispositif de manutention présente un levier à capteur (18) qui peut être actionné par le taquet de verrouillage d'un véhicule qui bute, pour déclencher l'abaissement sur le véhicule d'un grand conteneur debout, seul sur ses jambes d'appui.

10. Dispositif de manutention selon l'une des revendications 1 ou de 3 à 9, **caractérisé par le fait que** les dispositifs de levage (14) soient reliés mécaniquement aux jambes d'appui (7) de manière à ce que le repliement ou le dépliement des jambes d'appui s'effectue en fonction de l'actionnement du dispositif de levage.

11. Dispositif de manutention selon l'une des revendications de 1 à 10, **caractérisé par le fait que** chaque dispositif de levage (14) soit équipé par un plateau de poussée supérieur et un plateau de poussée inférieur dont l'une selon le mode d'actionnement choisi du dispositif de levage puisse se déplacer vers le haut ou respectivement vers le bas, le plateau de poussée complètement sorti permettant encore un mouvement horizontal limité.

12. Dispositif de manutention selon la revendication 11, **caractérisé par le fait que** le mouvement horizontal soit déterminé par le dispositif de levage en fonction du déplacement vertical.

13. Dispositif de manutention selon la revendication 12, **caractérisé par le fait que** le mouvement horizontal des plateaux de poussée soit déterminé l'un par rapport à l'autre à l'aide de levier, glissières ou d'autres choses de ce genre.

14. Utilisation d'un dispositif de manutention selon la revendication 11 pour le centrage d'un grand conteneur conduit en même temps que le dispositif de manutention sur un camion par rapport à un wagon de chemin de fer arrivant ensuite sur un rail, en ce que des jambes d'appui sont prévues soit au grand conteneur soit au dispositif de manutention, lors de l'utilisation desquelles le rail est pourvu, au niveau du lieu de manutention par tronçon, de rails de guidages (41) à surfaces latérales obliques (42, 43) dont les distances intérieures correspondent aux dimensions externes des pneus du camion et dont l'écart extérieur corresponde à la dimension interne des jambes d'appui du dispositif de manutention ou du grand conteneur, de sorte que, lors de l'arrivée du camion portant le grand conteneur levé sur les jambes d'appui, le camion soit d'abord placé grossièrement par rapport au rail, ensuite, lors du déchargement par celui-ci, le grand conteneur soit, sur les jambes d'appui, placé obliquement par rapport au rail, de manière à ce que, après la descente du grand conteneur, celui-ci prenne par rapport au rail sa position finale et puisse, pour cette raison, sans difficulté être abaissé sur la plate-forme d'un wagon se plaçant dessous.

15. Utilisation d'un dispositif de manutention selon l'une des revendications de 1 à 13 pour la manutention d'un container ISO qui peut être équipé de jambes d'appui enfilables, dispositif auquel aux ouvertures des pièces de coin du bas des faces du bout du container on fixe une traverse transversale (50) par verrouillage et auquel les jambes d'appui (7) sont sorties de la traverse transversale, déplacées angulairement et, le cas échéant, réglées en longueur et verrouillées de telle manière qu'elles s'appuient contre le container.

16. Utilisation d'un dispositif de manutention selon l'une les revendications de 1 à 13 pour la manutention d'un container ISO où le container est équipé de jambes d'appui, fixée à chaque pièce de coin du haut du container de sorte que chaque jambe d'appui puisse être rallongée d'une longueur inférieure à la hauteur du container, à une longueur suffisante pour poser le container à une hauteur déterminable allant au-delà de la hauteur du container et qui puisse être arrêtée dans une inclinaison souhaitée par au moins une pièce de connexion (63) à la pièce de coin inférieure du container.

17. Utilisation selon la revendication 16, **caractérisée par le fait que** les jambes d'appui sont chacune fixées de manière détachable aux pièces de coin supérieures du container.

18. Utilisation selon la revendication 16, **caractérisée par le fait que** chaque jambe d'appui soit constituée comme partie intégrante du container de sorte que celui-ci soit, dans le but de recueillir les charges verticales en cas d'empilage de plusieurs containers, en position repliée constitué comme pièce portante intégrante du container.
